# EUROPEAN PATENT SPECIFICATION

(11) **EP 1 847 693 B1**
(45) Date of publication and mention of the grant of the patent: **19.08.2009**
(21) Application number: 06008104.9
(22) Date of filing: 19.04.2006
(51) Int. Cl.: F01N 3/28

(54) **Exhaust Pipe of vehicle**
Abgasrohr eines Kraftfahrzeugs
Tuyau d'échappement de véhicule

(43) Date of publication of application: 24.10.2007
(73) Proprietor: Nakagawa Sangyo Co., Ltd., Takadaji, Shikatsu-cho, Nishikasugai-gun Aichi-ken (JP)
(72) Inventor: Nakagawa, Yukihiro, Shikatsu-cho Nishikasugai-gun Aichiken (JP)
(74) Representative: Kramer - Barske - Schmidtchen

(56) References cited:
- US-A1- 2002 095 787
- US-A1- 2002 172 626
- US-A1- 2003 121 252
- US-A1- 2003 159 414
- US-A1- 2003 211 020

## Description

### BACKGROUND OF THE INVENTION

### 1. Field of the invention

This invention relates to an exhaust pipe of vehicle (hereinafter referred to as "vehicle exhaust pipe"), especially the exhaust pipe incorporating a space to store a catalyst carrier for purifying the exhaust emissions.

### 2. Description of the Related Art

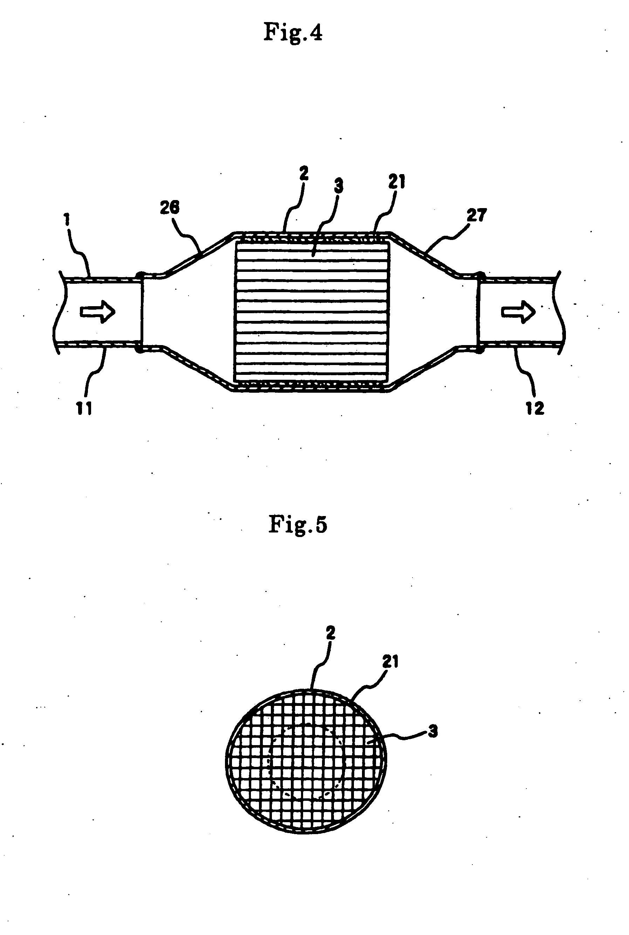

Figs. 4 and 5 respectively show an example of the conventional vehicle exhaust pipe. Fig. 4 is a vertical cross-sectional view of the conventional exhaust pipe. Fig. 5 shows a cross-sectional view of the conventional exhaust pipe. As shown in each drawing, a circular cylindrical housing 2 is connected to the exhaust pipe 1 having a circular cross section so that part of the pipe conduit is formed. The circular cylindrical housing 2 forms a storage space 21 having a diameter larger than the diameter of the exhaust pipe 1 therein the connection parts 26, 27 respectively provided on the both ends of the storage space 21 are gradually tapered and connected to the exhaust pipes 11 and 12 respectively. Each opening of the connection parts 26, 27 is connected to an opening of the upstream exhaust pipe 11 and the downstream exhaust pipe 12 respectively. A known honeycomb catalyst carrier 3 is stored in the storage space 21 so that the outer surface of the catalyst carrier is in contact with the inner surface of the storage space 21.

Japanese patent publication laid-open No. 2002-227643 teaches that one exhaust pipe is inserted and connected to the other exhaust pipe by tightening the bracket with bolts and nuts.

In the above conventional exhaust pipe, the diameter of the storage space 21 is larger than that of the exhaust pipe 1 so that the flow velocity of the exhaust gas through the catalyst carrier 3 can be sufficiently reduced, thus, the exhaust emissions can be surely purified through the catalyst supported in the catalyst carrier 3. However, the inventor in the present invention conducted an experiment and learned the fact that when the flow velocity of the exhaust gas in the upstream pipe 11 increases, the exhaust gas is not sufficiently diffused in the connection part 26 and most of the exhaust gas flow only near the center of the storage space 21 as indicated by a dotted circle line in Fig. 5 extending from the exhaust pipe 1. In other words, the flow velocity of the exhaust gas through the catalyst carrier 3 is not sufficiently reduced and the catalyst secured in the peripheral area of the catalyst carrier 3 hardly functions as an exhaust gas purifier. Therefore, the exhaust gas purification is not appropriately done in the conventional exhaust pipe system.

US 2003/0211020 A1 discloses an automotive exhaust gas noise attenuating device treating exhaust gas emissions. A ceramic substrate for passing an automotive exhaust stream thereto is provided wherein the substrate has a plurality of channels and is inserted into a canister supporting the substrate. Inlet and outlet flow guides are provided to the canister, wherein the inlet section narrows down to the substrate and the outlet section further narrows down to an exhaust pipe.

US 2002/0172626 A1, which forms the preamble of claim 1, refers to a gas treatment device and a system. The device comprises a substrate provided in a housing which is disposed concentrically about the substrate. The housing has a first portion having a decreasing internal diameter from a first end to a main body portion, the main body portion extending from the first portion substantially cylindrically.

### SUMMARY OF THE INVENTION

An object of this invention is to provide a vehicle exhaust pipe which can sufficiently purify the exhaust gas even if the flow velocity of the exhaust gas in the exhaust pipe is increased.

To achieve the above object, tube exhaust pipe proposed in this invention is a vehicle exhaust pipe comprising the features of claim 1.

In this invention, when the expanded portion is connectingly provided on the front side of the storage space, a sufficient amount of the exhaust gas which flows into the expanded portion is fully diffused while the flow velocity is decreasing therein, since the expanded portion has a cross sectional area larger than that of the storage space. And then the flow of the exhaust gas in the expanded portion is narrowed down into the storage space. Thus, the exhaust gas flows almost evenly into the inner and outer circumferences of the catalyst carrier in the storage space with the appropriate velocity so that the exhaust gas can sufficiently be purified. On the other hand, when the expanded portion is connectingly provided on the rear side of the storage space, the decreased flow velocity and diffusion of the exhaust gas in the expanded portion affect the function of the upstream storage space. Thus, the exhaust gas flows almost evenly into the inner and outer circumferences of the catalyst carrier in the storage space with the appropriate velocity so that the exhaust gas can sufficiently be purified. In the present invention, the vehicle exhaust pipe can provide a sufficient purification of the exhaust gas even if the flow velocity of the exhaust gas in the exhaust pipe increses.

### BRIEF DESCRIPTION OF THE DRAWINGS

Fig. 1 is a vertical cross sectional view of an exhaust pipe connected to a housing of an Embodiment of this invention.
Fig. 2 is a vertical cross sectional view of an exhaust pipe connected to a housing not having all features of this invention.
Fig. 3 is a vertical cross sectional view of an exhaust pipe connected to a housing of a further Embodiment of this invention.
Fig. 4 is a vertical cross sectional view of an exhaust pipe connected to a housing of the conventional invention.
Fig. 5 is a cross sectional view of the V-V line described in Fig. 4.

### DETAILED DESCRIPTION OF THE PREFERRED EMBODIMENTS

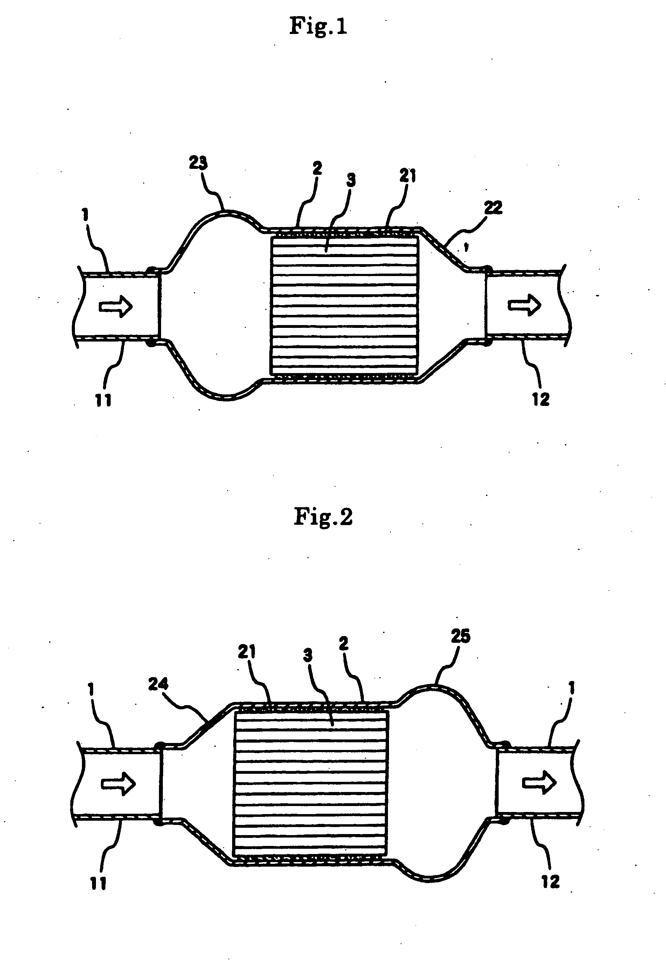

Fig. 1 shows a vertical cross-sectional view of the exhaust pipe connected to a housing. More precisely, in Fig. 1, a circular cylindrical housing 2 formed by a spinning process or the like connects to the exhaust pipe having a circular cross section, so that part of the pipe conduit can be created. The housing 2 forms a storage space 21 having a diameter larger than the diameter of the exhaust pipe 1 and connecting to the rear connection part 22. The connection part 22 is tapered toward the downstream exhaust pipe 12 and the diameter of the connection part 22 is gradually reduced and its opening is welded into the opening of the downstream exhaust pipe 12. And a known circular cylindrical honeycomb catalyst carrier 3 is stored in the storage space 21 so that the outer surface of the catalyst carrier 3 is in contact with the inner surface of the storage space 21.

In Embodiment 1, an expanded portion 23 having a diameter larger than the diameter of the storage space 21 is outwardly expanded from the outer circumference of the housing 2 and connectingly provided on the front face of the storage space 21. The diameter of the expanded portion 23 is gradually reduced toward the upstream exhaust pipe 11 and welded into the opening of the outer wall of the exhaust pipe 11

By providing the expanded portion 23 on the front face of the storage space 21, the velocity of the exhaust gas (indicated by a white arrow in Fig. 1) which flows into the housing 2 via the upstream exhaust pipe 11 decreases in the expanded portion 23 having a cross-sectional area larger than that of the storage space 21. The exhaust gas is fully diffused in the expanded portion 23 and then the flow of the exhaust gas is narrowed down into the storage space 21. Thus, the exhaust gas flows almost evenly into the entire end face of the catalyst carrier 3 in the storage space 21 with the appropriate velocity so that the exhaust gas can sufficiently be purified through the catalyst secured on the inner and outer circumference of the catalyst carrier 3.

In the Exhaust Pipe shown in Fig. 2, a connection part 24 having a diameter which is gradually reduced and tapered down toward the upstream exhaust pipe 11 is formed on the front face of the storage space 21 of the housing 2, and the opening of the connection part 24 is welded into the opening of the upstream exhaust pipe 11. An expanded portion 25 having the same structure as the expanded portion shown in Figure 1 is connectingly formed on the rear side of the storage space 21, and the opening of the expanded portion 25 is welded into the opening of the downstream exhaust pipe 12.

By providing the expanded portion 25 on the rear face of the storage space 21, a decrease in flow velocity and the diffusion of the exhaust gas (indicated by a white arrow in Fig. 2) in the expanded portion affect the upstream storage space 21. Thus, the exhaust gas flows almost evenly into the inner and outer circumferences of the catalyst carrier 3 in the storage space 21 with the appropriate velocity so that the exhaust gas can sufficiently be purified.

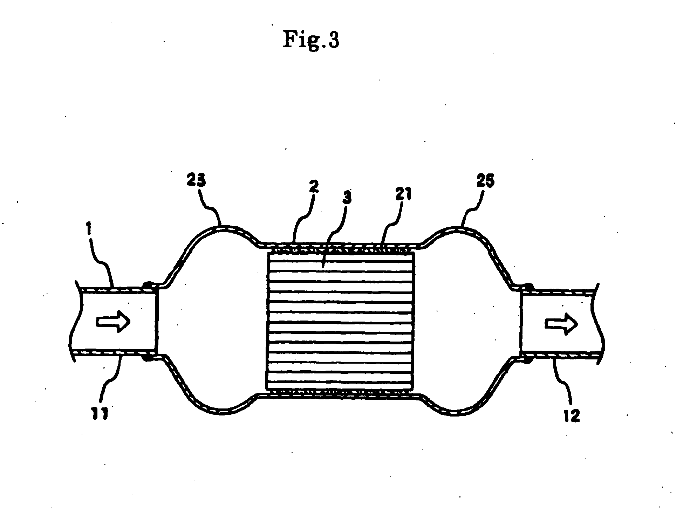

As shown in Fig. 3, the expanded portions 23, 25 are respectively provided on the front face and rear face of the storage space 21 of the housing 2 so that the exhaust gas can be purified more effectively by synergetic effect of the exhaust pipes shown in figures 1 and 2.

The opening edge of the expanded portions 23, 25 respectively connected to the exhaust pipe 1 is formed so as to create a continuous curved surface.

Thus, the exhaust gas can smoothly flow into the expanded portion 23 or flows out of the expanded portion 25. Furthermore, the diameter of the entire circumference of the expanded portion 23, 25 is not necessarily larger than the diameter of the storage space 21. In other words, the diameter of the expanded portions 23, 25 can only be partially larger than that of the storage sp ace 21.

## Claims

1. An exhaust pipe (1) of vehicle comprising a storage space (21) incorporating a catalyst carrier (3) which is provided on a mid area of a pipe conduit (2), and an expanded portion (23) with a diameter larger than the diameter of the storage space (21), which is provided on an upstream side of the pipe conduit (2),
**characterized in that**
the entire outer circumference of the expanded portion (23) is outwardly expanded and then gradually reduced toward the upstream end of the pipe conduit (2) so as to create a continuous curved surface.

## Patentansprüche

1. Auspuffrohr (1) eines Fahrzeugs, mit einem Speicherraum (21), der einen Katalysatorträger (3) enthält, der in einem Mittelbereich einer Rohrleitung (2) vorgesehen ist, und einem ausgeweiteten Bereich (23) mit einem größeren Durchmesser als der Durchmesser des Speicherraums (21), der auf einer stromaufwärtigen Seite der Rohrleitung (2) vorgesehen ist,
**dadurch gekennzeichnet, dass**
der gesamte Außenumfang des ausgeweiteten Bereichs (23) nach außen hin ausgeweitet ist und dann zum stromaufwärtigen Ende der Rohrleitung (2) graduell abnimmt, so dass eine durchgängige gekrümmte Oberfläche geschaffen wird.

## Revendications

1. Tuyau d'échappement (1) de véhicule, comprenant un espace de stockage (21) qui incorpore un support de catalyseur (3) qui est prévu sur une région intermédiaire d'un conduit de tuyau (2), et une partie expansée (23), dont le diamètre est supérieur au diamètre de l'espace de stockage (21), qui est prévue sur un côté amont du conduit de tuyau (2), **caractérisé en ce que** la totalité de la circonférence extérieure de la partie expansée (23) est expansée vers l'extérieur et est ensuite progressivement réduite en direction de l'extrémité amont du conduit de tuyau (2) de manière à créer une surface courbe continue.
